# DEMANDE DE BREVET EUROPEEN

(11) **EP 3 843 410 A1**
(43) Date de publication de la demande: **30.06.2021**
(21) Numéro de dépôt: 20217286.2
(22) Date de dépôt: 24.12.2020
(51) Int. Cl.: H04N 21/234, H04N 21/2343, H04N 21/2187, G06N 20/00, H04N 21/24, G06T 17/00, G06K 9/62, G06K 9/46

(54) **PROCÉDÉS DE TRANSMISSION ET DE RÉCEPTION DE FLUX, DISPOSITIFS ET PROGRAMME D'ORDINATEUR ASSOCIÉS**

(30) Priorité: 26.12.2019 FR 1915612
(71) Demandeur: THALES, 92400 Courbevoie (FR)
(72) Inventeur: MORARD, Jean-Pierre, 92622 GENNEVILLIERS CEDEX (FR); LAHSEN-CHÉRIF, Iyad, 92622 GENNEVILLIERS CEDEX (FR)
(74) Mandataire: Lavoix

(57) **Abrégé**

Procédé de transmission, selon lequel, seulement si la valeur courante collectée de bande passante est inférieure à ladite valeur requise, on répartit l'ensemble de données à transmettre en un premier et un deuxième segments, le deuxième segment (S2) comprenant un objet prédéfini, le premier segment (S1) correspondant aux autres données, les modalités de codage de l'ensemble de données comportant un traitement sélectif de codage sur le deuxième segment de données correspondant à une meilleure qualité de codage que celles des modalités de codage relatives au premier segment.

## Description

La présente invention concerne le domaine de la transmission de flux de données via un canal de transmission dont la valeur courante de bande passante ne permet pas de transmettre en continu chaque ensemble successif de données du flux selon les mêmes critères de compression.

Plus spécifiquement, l'invention concerne un procédé de transmission, via un canal de transmission associé à une bande passante disponible, d'un flux comprenant des ensembles successifs de données à transmettre, ledit procédé comprenant les étapes suivantes mises en œuvre par un dispositif d'émission pour l'émission de l'ensemble de données courant à transmettre :
- collecte de la valeur courante de bande passante disponible et comparaison de la valeur courante collectée avec la bande passante requise pour l'émission de l'ensemble de données courant à transmettre selon des premières modalités de codage dudit ensemble de données ;
- si la valeur courante collectée de bande passante est supérieure ou égale à ladite bande passante requise, transmission dudit ensemble de données courant codé selon lesdites premières modalités de codage dudit ensemble de données ;
seulement si la valeur courante collectée de bande passante est inférieure à ladite bande passante requise, transmission dudit ensemble de données courant codé selon des deuxièmes modalités de codage distinctes des premières modalités et requérant une bande passante inférieure à la valeur courante de bande passante disponible pour l'émission de l'ensemble de données courant à transmettre selon lesdites deuxièmes modalités de codage dudit ensemble de données.

On connaît ainsi la technique dite de taux de bit adaptatif (en anglais « adaptative bitrate ») utilisée notamment dans le streaming multimédia sur les réseaux informatiques, qui ajuste en temps réel le débit nécessaire (et donc la qualité du flux transmis) à la transmission du flux multimédia en fonction de la bande passante et en ajustant la qualité.

Ces techniques présentent toutefois l'inconvénient de présenter des variations importantes de qualité du flux transmis au niveau du destinataire, réduisant, voire empêchant, l'exploitation des données par le destinataire. A cet effet, l'invention propose, suivant un premier aspect, un procédé de transmission du type précité, caractérisé en ce qu'il comprend les étapes suivantes :
seulement si la valeur courante collectée de bande passante est inférieure à ladite bande passante requise, une liste d'objets d'intérêt ayant été prédéfinie,
détermination automatique de si l'ensemble de données courant à transmettre comporte au moins un desdits objets de la liste prédéfinie ;
si l'ensemble de données courant à transmettre a été déterminé comme comportant au moins un desdits objets de la liste prédéfinie, répartition des données de l'ensemble de données courant à transmettre en au moins un premier et un deuxième segments de données, le deuxième segment correspondant aux données déterminées comme le(s)dit(s) objet(s), le premier segment correspondant aux autres données, lesdites deuxièmes modalités de codage comprenant un traitement sélectif de codage sur le deuxième segment de données courant à transmettre, correspondant à une meilleure qualité de codage que celles des deuxièmes modalités de codage relatives au premier segment dudit ensemble de données.

Dans des modes de réalisation, le procédé suivant l'invention comporte en outre une ou plusieurs des caractéristiques suivantes :
- la qualité de codage du traitement sélectif de codage réalisé sur le deuxième segment de données est au moins égale, ou sensiblement égale, à la qualité de codage selon lesdites premières modalités de codage ;
- la détermination automatique de si l'ensemble de données courant à transmettre comporte au moins un desdits objets de la liste prédéfinie est effectuée à l'aide d'un modèle dudit objet préalablement issu d'un apprentissage automatique d'un réseau de neurones ;
- les ensembles de données sont des images et selon lequel, selon les deuxièmes modalités de codage, le premier segment n'est pas transmis, et une portion d'image vectorielle étant préalablement associée à chaque objet de la liste prédéfinie, les données relatives au deuxième segment transmises comportent un identifiant d'un objet de la liste déterminé dans l'image, la position dans l'image dudit objet et ladite portion d'image vectorielle.

Suivant un deuxième aspect, la présente invention propose un procédé de réception, depuis un canal de transmission associé à une bande passante disponible, d'un flux comprenant des ensembles successifs de données à transmettre, ledit procédé comprenant les étapes suivantes mises en œuvre par un dispositif électronique de réception :
- réception d'un ensemble de données courant codé selon des premières modalités de codage ou selon des deuxièmes modalités de codage selon la valeur de bande passante disponible, les premières modalités de codage requérant une bande passante supérieure aux deuxièmes modalités de codage ; et
- décodage dudit ensemble de données selon des premières modalités de décodage ou selon des deuxièmes modalités de décodage ;
   ledit procédé étant caractérisé en ce qu'il comprend les étapes suivantes mises en œuvre par le dispositif électronique de réception pour la mise en œuvre des deuxièmes modalités de décodage :
- décodage d'un premier segment de l'ensemble de données par un premier décodeur et le décodage d'un deuxième segment comprenant le reste de l'ensemble de données par un deuxième décodeur, les modalités de décodage desdits premier et deuxième décodeurs étant distinctes, la qualité des images décodées par le premier décodeur étant inférieure à celle des images décodées avec le deuxième décodeur ;
- détection dans le premier segment décodé par le premier décodeur de la présence d'au moins un objet prédéfini, en fonction d'une base de données comportant des modèles d'objets prédéfinis, préalablement obtenus d'un apprentissage automatique d'un réseau de neurones ;
- augmentation de la qualité du premier segment par modification, en fonction dudit modèle d'objet, dudit objet détecté.

Dans des modes de réalisation, le procédé de réception suivant l'invention comporte en outre comprenant une étape mise en œuvre par un dispositif électronique de réception de codage, selon des premières modalités de codage associées aux premières modalités de décodage, de l'ensemble de données comprenant le premier segment décodé ainsi modifié et le deuxième segment décodé en vue d'une émission dudit ensemble de données

Suivant un troisième aspect, la présente invention propose un programme d'ordinateur comportant des instructions logicielles qui, lorsqu'elles sont exécutées par un ordinateur, mettent en œuvre un procédé tel que défini ci-dessus suivant le premier ou le deuxième aspect de l'invention.

Suivant un quatrième aspect, la présente invention propose un dispositif émetteur adapté pour transmettre, sur un canal de transmission associé à une bande passante disponible, un flux comprenant des ensembles successifs de données à transmettre, pour collecter la valeur courante de bande passante disponible et pour comparer la valeur courante collectée avec la bande passante requise pour l'émission de l'ensemble de données courant à transmettre selon des premières modalités de codage dudit ensemble de données ;
- ledit dispositif émetteur étant adapté, si la valeur courante collectée de bande passante est supérieure ou égale à ladite bande passante requise, transmettre ledit ensemble de données courant codé selon lesdites premières modalités de codage dudit ensemble de données ;
- ledit dispositif émetteur étant adapté, seulement si la valeur courante collectée de bande passante est inférieure à ladite bande passante requise, pour transmettre ledit ensemble de données courant codé selon des deuxièmes modalités de codage distinctes des premières modalités et requérant une bande passante inférieure à la valeur courante de bande passante disponible pour l'émission de l'ensemble de données courant à transmettre selon lesdites deuxièmes modalités de codage dudit ensemble de données ;
ledit dispositif émetteur étant caractérisé en ce qu'il est adapté pour, seulement si la valeur courante collectée de bande passante est inférieure à ladite bande passante requise, une liste d'objets d'intérêt ayant été prédéfinie, déterminer automatiquement si l'ensemble de données courant à transmettre comporte au moins un desdits objets de la liste prédéfinie ;
ledit dispositif émetteur étant adapté pour, si l'ensemble de données courant à transmettre a été déterminé comme comportant au moins un desdits objets de la liste prédéfinie, répartir des données de l'ensemble de données courant à transmettre en au moins un premier et un deuxième segments de données, le deuxième segment correspondant aux données déterminées comme le(s)dit(s) objet(s), le premier segment correspondant aux autres données, lesdites deuxièmes modalités de codage comprenant un traitement sélectif de codage sur le deuxième segment de données courant à transmettre, correspondant à une meilleure qualité de codage que celles des deuxièmes modalités de codage relatives au premier segment dudit ensemble de données.

Suivant un cinquième aspect, la présente invention propose un dispositif récepteur adapté pour recevoir, depuis un canal de transmission associé à une bande passante disponible, un flux comprenant des ensembles successifs de données à transmettre,
ledit dispositif récepteur étant adapté pour recevoir un ensemble de données courant codé selon des premières modalités de codage ou selon des deuxièmes modalités de codage selon la valeur de bande passante disponible, les premières modalités de codage requérant une bande passante supérieure aux deuxièmes modalités de codage, pour décoder ledit ensemble de données selon des premières modalités de décodage ou selon des deuxièmes modalités de décodage ;
ledit dispositif récepteur étant caractérisé en ce qu'il comprend un premier décodeur et un deuxième décodeur et en ce qu'il est adapté pour, lors du décodage selon les deuxièmes modalités de décodage :
décoder un premier segment de l'ensemble de données avec le premier décodeur et décoder un deuxième segment comprenant le reste de l'ensemble de données avec deuxième décodeur, les modalités de décodage desdits premier et deuxième décodeurs étant distinctes, la qualité des images décodées par le premier décodeur étant inférieure à celle des images décodées avec le deuxième décodeur ;
   - ledit dispositif récepteur étant adapté pour détecter dans le premier segment décodé par le premier décodeur, la présence d'au moins un objet prédéfini, en fonction d'une base de données comportant des modèles d'objets prédéfinis, préalablement obtenus d'un apprentissage automatique d'un réseau de neurones ;
   - ledit dispositif récepteur étant adapté pour augmenter la qualité du premier segment par modification, en fonction dudit modèle d'objet, dudit objet détecté.

Ces caractéristiques et avantages de l'invention apparaîtront à la lecture de la description qui va suivre, donnée uniquement à titre d'exemple, et faite en référence aux dessins annexés, sur lesquels :
[Fig 1] la figure 1 représente une vue schématique d'un système de télécommunication comportant des dispositifs émetteur et récepteur dans un mode de réalisation de l'invention ;
[Fig 2] la figure 2 représente une vue schématique d'un bloc de compression dans un dispositif émetteur dans un mode de réalisation de l'invention ;
[Fig 3] la figure 3 est un chronogramme montrant l'évolution des traitements en compression et décompression selon la bande passante en fonction du temps dans un mode de réalisation de l'invention ;
[Fig 4] la figure 4 représente une image traitée par un dispositif émetteur dans un mode de réalisation de l'invention ;
[Fig 5] la figure 5 est un organigramme d'étapes mises en œuvre dans un mode de réalisation de l'invention ;
[Fig 6] la figure 6 représente une vue schématique d'un système de télécommunication comportant des dispositifs émetteur et récepteur dans un mode de réalisation de l'invention ;
[Fig 7] la figure 7 représente une vue schématique d'un système de télécommunication comportant des dispositifs émetteur et récepteur dans un mode de réalisation de l'invention.

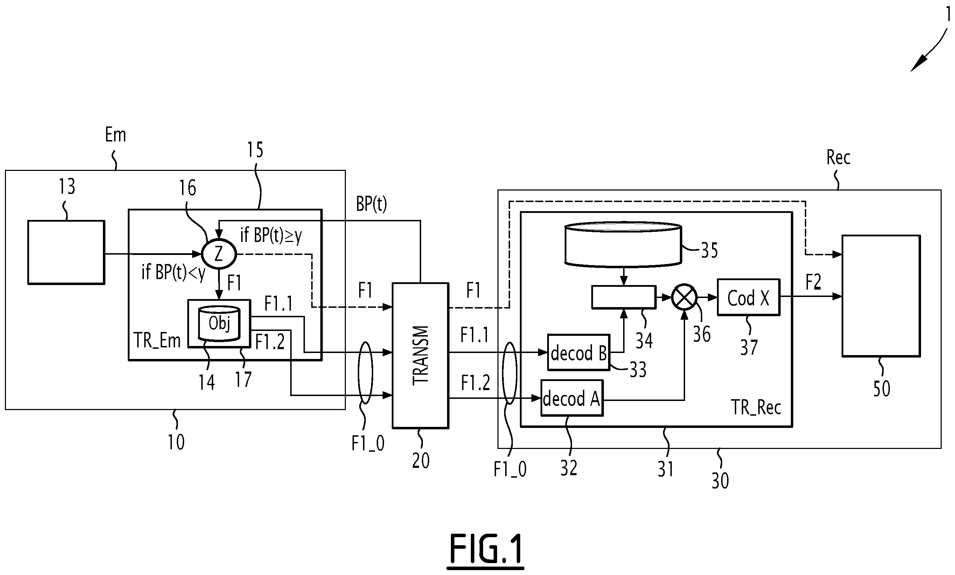

La figure 1 représente une vue schématique d'un système 1 de télécommunication dans un mode de réalisation de l'invention, comportant des dispositifs électroniques émetteur (Em) 10 et récepteur (Rec) 30 et une liaison de télécommunication 20, par exemple radio ou filaire, pour effectuer la transmission d'un flux de données fournir par le dispositif émetteur 10 jusqu'au dispositif récepteur 30. La valeur de la bande passante de la liaison 20 disponible à l'instant t pour transmettre le flux délivré par le dispositif émetteur est variable dans le temps par exemple et est notée BP(t).

Dans le cas particulier décrit ici, il est considéré que le flux transmis est un flux d'images successives, mais les ensembles de données successifs à transmettre peuvent également comprendre dans des modes de réalisation, à la place ou en plus d'images, des données audios, des données de textes ...

Dans le cas particulier considéré, par exemple, les images sont fournies sous format brut (par exemple format raw) par un capteur vidéo à un nœud de communication N0 d'un réseau de communication ad hoc, le nœud N0 et le capteur étant embarqués dans un drone ; les images sont transmises de nœud à nœud jusqu'à un nœud NF destinataire final par exemple. Chaque nœud du réseau ad hoc comprend donc, outre une antenne radio d'émission et réception, et un bloc d'émission-réception HF, par exemple UHF ou VHF (non représentés) effectuant les transpositions de fréquence et les modulations/démodulation, ainsi qu'un dispositif émetteur similaire au dispositif émetteur 10 et un dispositif récepteur similaire au dispositif récepteur 30.

Considérons ici, à titre d'exemple, que le dispositif émetteur 10 de la figure 1 est intégré dans un premier nœud N1 de communication ad hoc et que le dispositif récepteur 30 est intégré dans un deuxième nœud N2 de communication ad hoc à un bond du premier nœud.

Dans le mode de réalisation considéré, le dispositif émetteur 10 comporte un bloc d'obtention 13 des données et un bloc électronique de traitement avant émission 15, nommé bloc TR_Em 15.

Le bloc d'obtention des données 13 est adapté pour délivrer au bloc TR_Em 15 chaque image du flux vidéo sous forme codée, à l'aide d'un premier codeur vidéo, nommé codeur X et requérant un débit de transmission donné, par exemple nommé γ. L'image ainsi codée a par exemple été transmise par le nœud ad hoc situé à un bond du nœud N1 en amont sur la route empruntée par l'image depuis le nœud N0 jusqu'au nœud NF. Le bloc d'obtention des données 13 est par exemple un bloc d'interface entre le dispositif récepteur 30 et le dispositif émetteur du nœud N1.

Le codeur X est adapté pour encoder des images vidéos selon des premières modalités de codage, nommées mod X.

Le bloc TR_Em 15 comprend un bloc de test 16 et un bloc électronique de compression 17.

Le bloc TR_Em 15 est adapté pour collecter la valeur courante BP(t) de bande passante disponible sur la liaison 20 avant traitement de chaque nouvelle image qui lui est fournie par le bloc d'obtention des données 13.

Le bloc de test 16 est adapté pour comparer cette valeur courante BP(t) avec le débit γ, et en fonction de cette comparaison, le bloc émetteur 10 est adapté pour :
- si BP(t) ≥ γ : émettre alors l'image telle que codée antérieurement par le codeur X sur la liaison de communication 20 à destination du nœud suivant sur la route entre N0 et NF (flux F1 émis à la fréquence d'émission RF) ;
- si BP(t) < γ : fournir l'image telle que codée antérieurement par le codeur X en au bloc de compression 17 (flux F1 en bande de base).

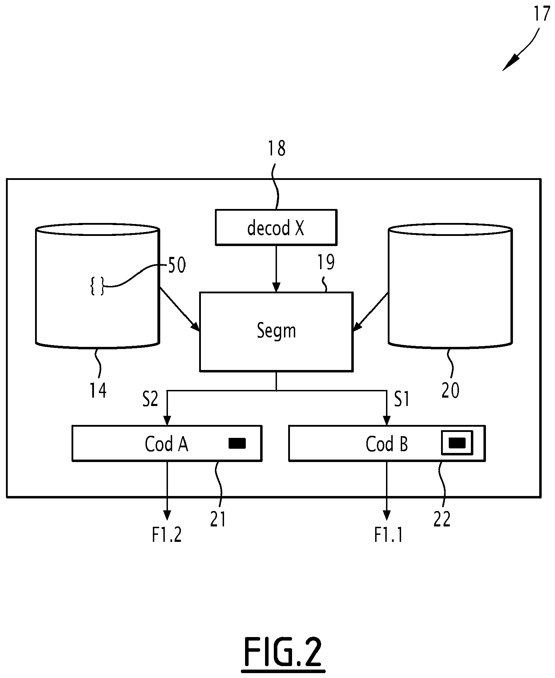

En référence à la FIG 2, le bloc de compression 17 comprend une base de données 14 listant un ensemble d'objets Obj1, ...ObjN (i.e. ensemble des classes, référencé 50, des objets d'intérêts pour toute la durée de la mission, civile ou militaire), un décodeur vidéo 18, nommé decod X, adapté pour décoder des images vidéos codées avec le codeur X, un bloc de segmentation 19, une base de données de définition des objets 20 et deux codeurs vidéos 21, 22, nommés respectivement codeur A et codeur B.

Le codeur A est adapté pour encoder des images vidéos selon des modalités de codage nommées mod A.

Le codeur B, est adapté pour encoder des images vidéos selon des modalités de codage nommées mod B, distinctes des modalités mod A mises en œuvre par le codeur A.

Chacun des codeurs X, A, B est adapté pour compresser les images selon une qualité de codage respective, fonction notamment de la (perte de) résolution admise de l'image codée, fonction de la fréquence des images, de la perte de données admise dues à la technique de codage (fonction notamment du nombre de bits pour coder chaque pixel), et du niveau de qualité visuelle perçue souhaitée de l'image décodée: ce sont ces éléments notamment qui définissent les modalités de codage mentionnées ci-dessus

Dans un mode de réalisation de l'invention, le bloc électronique de compression 17 comprend un processeur et une mémoire (non représentés) ; la mémoire comprend des instructions logicielles qui lorsqu'elles sont exécutées sur le processeur, mettent en œuvre les étapes décrites ci-après comme incombant au bloc de compression 17 ou à l'une de ses variantes 17', 17".

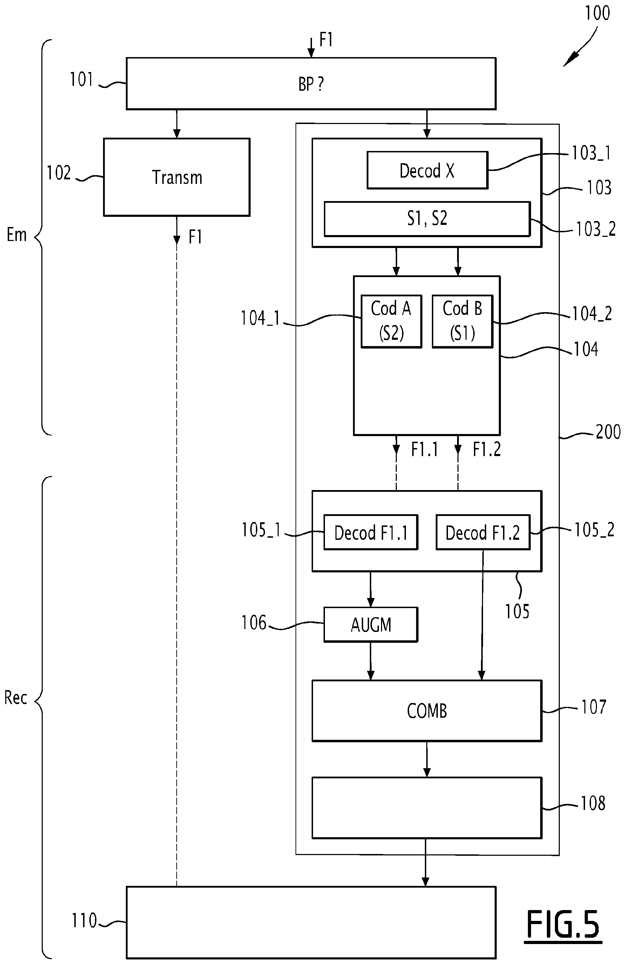

En référence à la figure 5, les étapes d'un procédé 100 dans un mode de réalisation de l'invention sont décrites, une image d'un flux F1 d'images vidéos préalablement codeur avec un codeur X étant fournie en entrée du bloc TR_Em 15 en bande de base.

Dans une étape 101, le bloc de test 16 compare la valeur courante BP(t) avec le débit γ nécessaire pour transmettre l'image.

Pour chaque nouvelle image considérée à un instant t : si BP(t) ≥ γ : dans une étape 102, l'image telle que codée antérieurement par le codeur X est émise par le bloc TR_Em 15 sur la liaison de communication 20, à destination du nœud suivant sur la route entre N0 et NF.

Et si BP(t) < γ : l'image est alors fournie au bloc de compression 17 et un ensemble d'étapes 200, comportant les étapes 103 à 108 est alors mis en œuvre.

Dans l'étape 103 de segmentation, l'image est tout d'abord décodée à l'aide du décodeur decod X 18 dans une sous-étape 103_1.

Puis dans une étape 103_2, le bloc de segmentation 19 détermine si des objets d'intérêt tels que définis dans la base de données d'objets 14 sont représentés dans l'image.

Dans le cas considéré, par exemple le domaine de la tactique militaire, les objets d'intérêt comprennent par exemple des véhicules ennemis tels que des chars ou des camions ennemis. Dans le mode de réalisation considéré, le bloc de segmentation 19 utilise l'algorithme de Deep Learning de détection d'objets de type YOLO (You Only Look Once), R-CNN, Fast-R-CNN, Faster-R-CNN pour détecter si de tels objets d'intérêt sont présents dans l'image. Et les objets de la liste mémorisée dans la base de données 14 sont définis dans la base de données de définition des objets 2, comprenant la liste des classes d'objets apprises : chaque objet d'intérêt y est défini par un modèle respectif de l'objet, obtenu par apprentissage automatique de type machine Learning à l'aide de réseaux de neurones profonds, sur la base d'un ensemble d'images dans différents contextes opérationnels, sous différents angles de vue, à différentes distances, sous différentes expositions lumineuses, de l'objet.

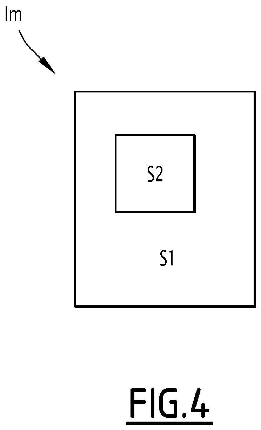

Si le bloc de segmentation 19 détermine qu'un objet d'intérêt (ou plusieurs objets) est présent dans l'image, il délimite au plus juste la partie d'image représentant cet objet, l'extrait et en constitue un premier segment d'image S2, le segment S1 étant constitué du reste de l'image (voir par exemple en figure 4). Si le bloc de segmentation 19 détermine qu'aucun objet d'intérêt n'est présent dans l'image, le segment S1 est constitué de l'ensemble de l'image.

Dans une étape 104 de codage, le segment S2 est fourni au codeur A, qui code le segment vidéo S2 conformément aux modalités de codage mod A tandis que le segment S1 est fourni au codeur B, qui code le segment vidéo S1 conformément aux modalités de codage mod B. Puis les segments S1 et S2 codés résultants sont émis par le bloc TR_Em 15 après modulation et transposition en fréquence sur la liaison de communication RF 20. Le flux F1_0 résultant est constitué du sous-flux F1.1 comprenant les segments S1 codés par le codeur B et du sous-flux F1.2 comprenant les segments S2 codés par le codeur A.

Les modalités distinctes de codage mod A et mod B mises en œuvre par les codeurs A et B sont sélectionnées pour que le débit nécessaire pour la transmission des deux segments soit inférieur à BP(t), signifiant la bande passante disponible à l'instant « t », tout en dégradant le moins possible la qualité d'image au moins du segment S2, par rapport au codage selon les modalités mod X, ou en tout cas en permettant que l'exploitation visée puisse avoir lieu sur les parties d'images correspondant aux objets d'intérêt prédéterminés, la qualité de codage d'image du segment S2 étant supérieure à celle du segment S1.

Le segment S2 est codé à haute définition tandis que le segment S1 est codé à plus basse définition, dans un mode de réalisation.

Suivant les modes de réalisation :
- la résolution du segment S2 codé par le codeur A est la même que celle de l'image codée par le codeur X ou sensiblement la même et/ou le niveau de qualité suivant une métrique de type PSNR (Peak Signal to Noise Ratio), SSIM (STRUCTURAL SIMILARITY INDEX MEASURE) est le même ; cependant pour s'adapter au débit disponible une dégradation de la résolution et/ou des métriques est possible ; et/ou
- l'encodage de S1 utilisée reste de la bande passante disponible après l'encodage de S2 ;
- l'ensemble des paramètres de compressions seront déterminés pour dégrader le moins possible le flux S1.

A titre d'exemples purement illustratifs :
- le codeur X est par exemple de type H265, avec un profil standard Main12 par exemple 4.2 choisi parmi plusieurs profils possibles du codage H265 (le profil définit les valeurs de paramètres de compression tels que le bit rate, le PSNR, le framerate, le type de codage entropique, la profondeur des couleurs, le type entrelacement, le nombre de passe, etc...) ; et/ou le codeur A est par exemple de type H266, qui donne une très bonne qualité de codage avec un très grand taux de grande compression, mais qui consomme beaucoup de CPU et le codeur B est de type H266.

Considérons à présent le dispositif récepteur 30 représenté en figure 1, qui comporte un bloc électronique de traitement après réception 31 et un bloc d'interface 50.

Le bloc électronique de traitement après réception 31, nommé ci-après bloc TR_Rec 31 comprend un décodeur vidéo 32, nommé decod A, et un autre décodeur vidéo 33, nommé decod B 33, un bloc d'augmentation 34 associé à une base de données 35, un bloc mélangeur 36 et un codeur X 37 adapté pour encoder des images vidéos selon les premières modalités de codage.

Si le flux reçu par le dispositif récepteur 30 est un flux F1 comportant les images codées selon les modalités mod X du codeur X, le dispositif récepteur 30 est adapté pour le fournir directement en entrée du bloc d'interface 50, après passage en bande de base et démodulation.

Si le flux reçu par le dispositif récepteur 30 est un flux F1_0 comportant les sous-flux F1.1 et F1.2 issus des codages respectifs des codeurs B et A, le dispositif récepteur 30 est alors adapté pour le fournir en entrée du bloc TR_Rec 31, après passage en bande de base et démodulation.

Le bloc TR_Rec 31 est adapté pour fournir le sous-flux F1.1 reçu en entrée du décodeur B 33 et pour fournir le sous-flux F1.2 reçu en entrée du décodeur A 32.

Chaque décodeur vidéo 32, 33, nommé decod A, respectivement decod B, est adapté pour décoder des images vidéos codées avec le codeur A 21, respectivement le codeur B 22. Le décodeur A est adapté pour délivrer le segment S2 décodé au bloc mélangeur 36. Le décodeur B est adapté pour délivrer le segment S1 décodé au bloc d'augmentation 34.

Le bloc d'augmentation 34 est adapté pour effectuer un traitement d'amélioration de la définition du segment S1 et pour délivrer en entrée du bloc mélangeur 36 le segment S1 ainsi décodé à la définition améliorée.

Dans le mode de réalisation considéré, le bloc d'augmentation 34 utilise pour ce faire par exemple des modèles obtenus par apprentissage automatique de type machine Learning à l'aide de réseaux de neurones stockés dans la base de données 35 qui lui est associée. Dans d'autres modes de réalisation, la résolution est améliorée par des techniques d'upscaling s'appuyant potentiellement sur des réseaux de neurones profonds.

Le bloc mélangeur 36 est adapté pour réunir les deux segments d'images qui lui sont fournis en entrée correspondant aux segments S1 et S2 afin de lisser les contours des segments respectifs (« deblocking filter »). Le bloc mélangeur 36 est adapté pour délivrer l'image résultante au bloc d'interface 50.

Suivant les modes de réalisation, le bloc d'interface 50 est adapté pour délivrer le flux qui lui est fourni en entrée au dispositif émetteur du nœud N2 (similaire au dispositif émetteur 10 du nœud N1 et non représenté) et/ou pour effectuer des traitements supplémentaires.

Dans un mode de réalisation de l'invention, le bloc électronique de restitution 31 comprend un processeur et une mémoire (non représentés) ; la mémoire comprend des instructions logicielles qui lorsqu'elles sont exécutées sur le processeur, mettent en œuvre les étapes décrites ci-après comme incombant au bloc de restitution 31 ou à l'une de ses variantes 31', 31".

En référence à la figure 5, si le flux reçu par le dispositif récepteur 30 est un flux F1 comportant les images codées selon les modalités mod X du codeur X, le dispositif récepteur 30 le fournit directement au bloc d'interface 50, après passage en bande de base et démodulation, pour la mise en œuvre de l'étape 110.

Si le flux reçu par le dispositif récepteur 30 est un flux F1_0 comportant les sous-flux F1.1 et F1.2 issus des codages respectifs des codeurs B et A, le dispositif récepteur 30 le fournit en entrée du bloc TR_Rec 31, après passage en bande de base et démodulation qui le traite.

Dans une étape 105, le bloc TR_Rec 31 extrait les sous-flux F1.1 et F1.2, fournit le sous-flux F1.1 au décodeur B 33 et le sous-flux F1.2 au décodeur A 32.

Dans une sous-étape 105_1, le décodeur B décode le segment S1 et le délivre au bloc d'augmentation 34. Dans une sous-étape 105_2, le décodeur A décode le segment S2 et le délivre au bloc mélangeur 36. Les modalités de décodage sont distinctes entre décodeur A et décodeur B.

Le bloc d'augmentation 34 améliore la définition du segment S1 dans une étape 106. Ce traitement permet de reconstituer les contours, la texture et détails d'image du segment S1, de retirer le bruit apporté par la basse résolution et la substitution d'objet (exemple : remplacement d'un véhicule par l'identification et la reconnaissance du modèle de véhicule et de ses caractéristiques : couleurs, options ... grâce à sa plaque d'immatriculation). Dans le mode de réalisation considéré, le bloc d'augmentation 34 utilise pour ce faire en outre par exemple des modèles d'objets divers (relief, objets urbains, arbres, véhicules, nuances telles que des ombres, etc.) stockés dans la base de données 35 qui lui est associée et préalablement obtenus en se basant sur des algorithmes génératifs (GAN) d'apprentissage automatique de type Machine Learning à l'aide de réseaux de neurones profonds. Le traitement par le bloc d'augmentation 34 permet de reconnaître à l'aide de cette base de données, les objets non essentiels qui ne figuraient pas dans la base de données d'objets 14, comme les éléments d'arrière-plan et de les compléter.

Par exemple, le gazon sur l'image sera détecté et restitué avec une résolution plus élevée que celle reçue par le nœud N2.

Le bloc d'augmentation 34 délivre en entrée du bloc mélangeur 36 le segment S1 ainsi décodé à la définition améliorée.

Dans une étape 107, le bloc mélangeur 36 recombine les deux segments d'images (dont la qualité d'image, après le passage du segment S1 par le bloc d'augmentation, peut être équivalente) et délivre l'image résultante au bloc d'interface 50 (flux F2).

Dans l'étape 110, suivant les modes de réalisation, le bloc d'interface 50 délivre le flux qui lui est fourni en entrée (F1 ou F2 suivant les périodes) au dispositif émetteur 10 du nœud N2 et/ou effectue des traitements autres.

Dans le nœud destinataire final NF, l'image décodée est traitée par des algorithmes de traitement d'image par exemple ou exploitée autrement, en particulier la portion d'image S2 comprenant les objets d'intérêt.

On notera que l'étape d'augmentation est optionnelle.

La présente invention permet de fournir des images présentant une qualité d'image maîtrisée sur les portions d'images représentant des objets d'intérêt, tout en s'adaptant aux variations de bande passante. L'utilisation de techniques pour améliorer la définition en se basant sur des techniques d'intelligence artificielle permet en outre de maintenir un niveau de qualité d'image sur l'ensemble de l'image, sans nuire à la justesse d'interprétation et d'exploitation de l'image.

L'invention permet ainsi de transmettre des données en garantissant une qualité d'image optimale pour des objets identifiés préalablement comme d'intérêt. Les objets d'intérêt sont variables bien sûr en fonction du domaine.

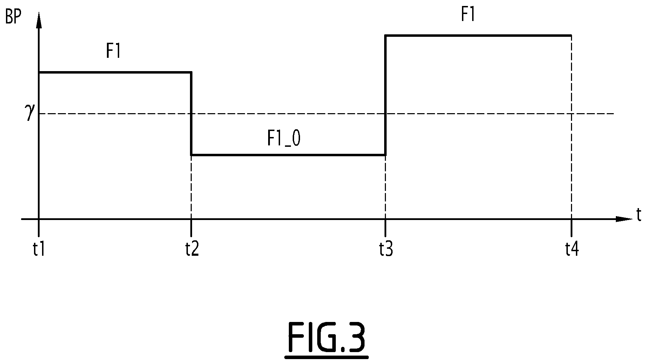

En figure 3 sont représentées les évolutions de la bande passante disponible BP(t) et les adaptations en conséquence du flux d'images transmises selon l'invention. Ainsi de t1 à t2, la bande passante disponible est suffisante pour transmettre le flux codé par le codeur X (flux F1), puis à t2 et jusqu'à t3, la bande passante diminue et ne permet plus de transmettre avec le débit nécessaire, donc le traitement segmentant les images selon l'invention est mis en œuvre pour transmettre le flux codé par les codeurs A, B (flux F1_0) ; à t3, la bande passante augmente et permet à nouveau une transmission des images codées par le codeur X.

Dans des modes de réalisation, le bloc de compression 17 peut être remplacé par un bloc de compression 17', respectivement 17" et similairement le bloc de restitution 31 par un bloc de compression 31', respectivement 31" décrits ci-dessous.

Dans des modes de réalisation, le bloc de compression 17 opère comme décrit plus haut tant que le débit BP(t) est supérieur à un seuil prédéterminé, BP1', respectivement BP1", et opère comme décrit ci-dessous pour le bloc de compression 17', respectivement 17", sinon ; et alors le bloc de restitution 31 opère comme décrit plus haut tant que le débit BP(t) est supérieur à BP1', respectivement BP1" et opère comme décrit ci-dessous pour le bloc de restitution 31', respectivement 31" sinon.

Dans un mode de réalisation, le bloc de compression 17 opère comme décrit plus haut tant que le débit BP(t) est supérieur à un seuil prédéterminé, BP1, opère comme décrit ci-dessous pour le bloc de compression 17" quand le débit est compris entre BP1 et BP2 comme décrit ci-dessous pour le bloc de compression 17" et opère comme décrit ci-dessous pour le bloc de compression 17' sinon. Dans ce cas, le bloc de restitution 31 opère comme décrit plus haut pour une image reçue codée par le bloc de compression 17, comme le bloc de restitution 31' pour une image reçue codée par le bloc de compression 17' et comme le bloc de restitution 31" pour une image reçue codée par le bloc de compression 17".

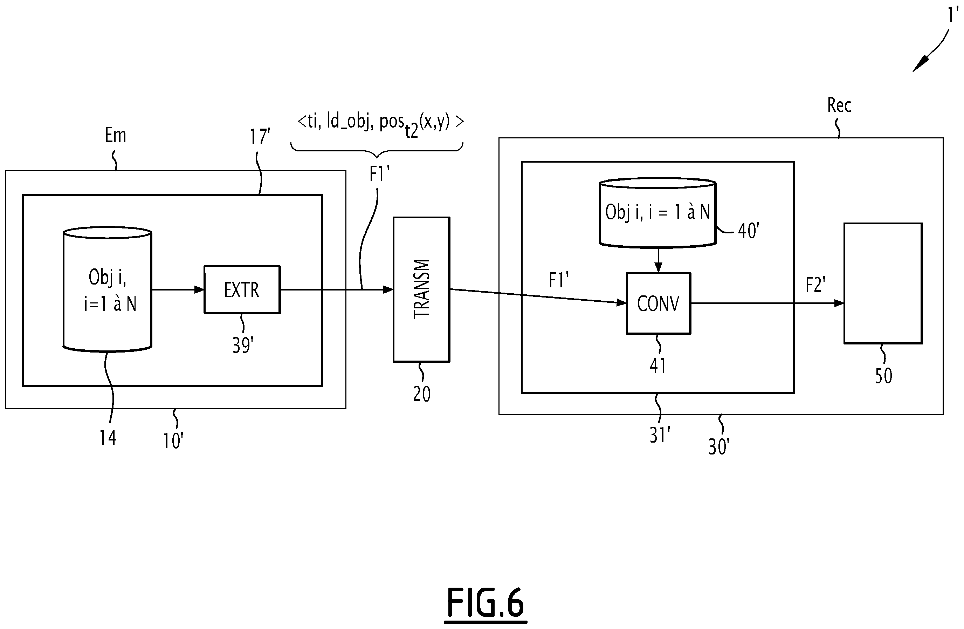

En référence à la figure 6, le dispositif émetteur 10' comporte des éléments similaires au dispositif émetteur 10 de la figure 1, si ce n'est que le bloc de compression 17 est remplacé par le bloc de compression 17'.

Le bloc de compression 17' comprend la base de données 14 listant l'ensemble d'objets Obj1, ...ObjN associé chacun à un identifiant d'objet, ainsi qu'un bloc d'extraction 39'. Le bloc d'extraction 39' est adapté pour détecter sur chaque image reçue, si un objet d'intérêt (ou plusieurs) est présent dans l'image, pour identifier lequel et sa position.

Pour ce faire, le bloc d'extraction 39' utilise par exemple également l'algorithme YOLO v3 décrit plus haut et la base de données YOLO v3. Le traitement est par exemple complété par un autre algorithme qui déterminera le centre de l'objet inscrit dans le rectangle fourni par YOLO v3. Puis le bloc de compression 17' génère pour l'image traitée, un ensemble de données comportant pour chaque objet détecté le temps de capture de l'image, l'identifiant de l'objet détecté et la position dans l'image de l'objet posₜᵢ (x,y). L'ensemble de données est conforme à une syntaxe/format/grammaire/sémantique prédéfinie et partagée avec le récepteur

Puis les données sont émises sur le moyen de transmission ensuite par le bloc TR_Em 15 après modulation et transposition en fréquence sur la liaison de communication RF 20 (flux F1').

Le dispositif récepteur 30' comporte des éléments similaires au dispositif récepteur 30 de la figure 1, si ce n'est que le bloc de restitution 31 est remplacé par le bloc de restitution 31'. Le bloc de restitution 31' comprend un bloc de conversion 41 et une base d'objets 40'. Le bloc de conversion 41 est adapté pour recevoir le flux F1'. Le bloc de conversion 41 est adapté pour créer une image de synthèse associée à chaque image en fonction des données relatives à chaque objet d'intérêt insérées dans l'ensemble de données transmis pour chaque image du flux F1'. Il comporte par exemple un moteur de rendu 3D.

La base d'objets 40' comporte pour chaque objet d'intérêt de la base 14 associé à son identifiant d'objet, des données définissant une représentation de l'objet, par exemple une image vectorielle de l'objet d'intérêt.

Le bloc de conversion 41 convertit l'ensemble de données émis pour chaque image en langage de description 3D (LD3D par exemple) et réalise une interprétation image par image en langage de description de vidéos : par exemple, il définit un fond d'image (sur laquelle une représentation vectorielle des objets d'intérêts est positionnée à aux positions posₜᵢ(x,y)) en en fonction de la position et de l'orientation du capteur d'image au temps ti qui fait des parties des données de missions au même titre que la liste des objets d'intérêts et en outre d'une base de données terrain fournissant les données géographiques de terrain par des techniques de fusion d'information. Puis sont interpréter par un algorithme de conversion en scène virtuelle 3D. Les interprétations ainsi générées sont fournies au bloc d'interface 50.

Dans le bloc d'interface 50, ces informations sont rendues par un moteur de rendu graphique tels que LD3D®, WebGL®, X3D®, O3®.

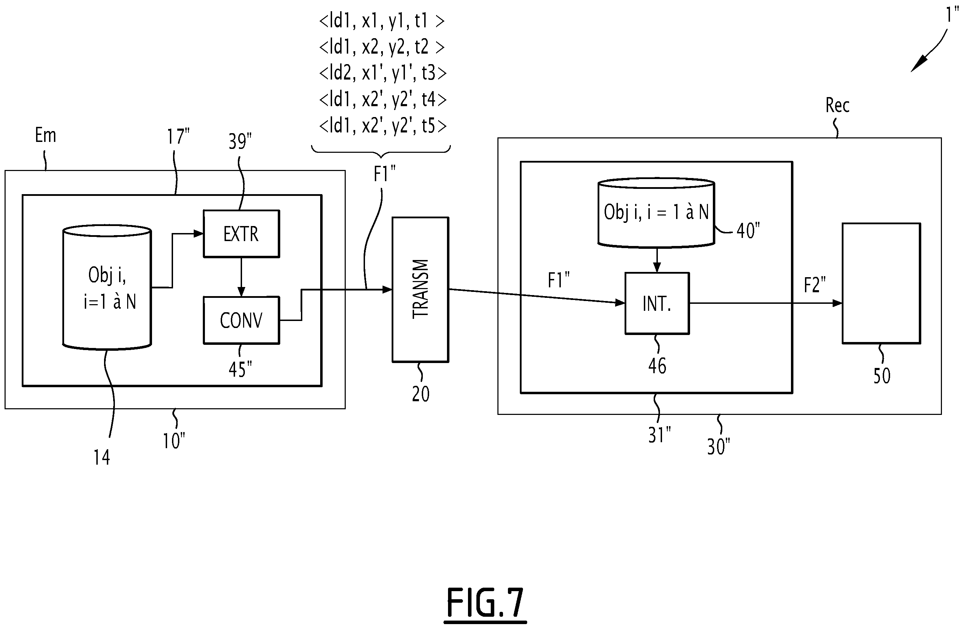

En référence à la figure 7, le dispositif émetteur 10" comporte des éléments similaires au dispositif émetteur 10 de la figure 1, si ce n'est que le bloc de compression 17 est remplacé par le bloc de compression 17".

Le bloc de compression 17" comprend la base de données 14 listant l'ensemble d'objets Obj1, ...ObjN associé chacun à un identifiant d'objet, ainsi qu'un bloc d'extraction 39" et un bloc de conversion 45". Le bloc d'extraction 39" est adapté pour détecter sur chaque image reçue, si un objet d'intérêt (ou plusieurs) est présent dans l'image, pour identifier lequel et sa position.

Pour ce faire, il utilise par exemple également l'algorithme de segmentation sémantique (découpage selon le contour précis de l'objet et non pas du rectangle englobant) tel que U-net et Mask-R-CNN.

Puis le bloc d'extraction 39" génère pour l'image traitée, un ensemble de données comportant pour chaque objet détecté le temps ti de capture de l'image, l'identifiant de l'objet détecté et la position dans l'image de l'objet posₜᵢ (x,y) et fournit ces informations au bloc de conversion 45".

Le bloc de conversion 45", comportant un serveur de Remote User Interface (RUI) basé sur des protocoles tel que VMware Blast Extreme, PColP, RDP RemoteFx capable, Citrix HDX et effectue alors une conversion, pour chaque image, en primitive RUI en remplaçant les objets reconnus par leurs masques.

Le dispositif récepteur 30" comporte des éléments similaires au dispositif récepteur 30 de la figure 1, si ce n'est que le bloc de restitution 31 est remplacé par le bloc de restitution 31". Le bloc de restitution 31" comprend un bloc d'interprétation 46 et une base d'objets 40" (contient le catalogue de description (frame, texture, ...) des classes d'objets et sert à reconstruire l'instance de l'image synthétique de l'objet à partir de son masque (empreinte/contour objet détouré) évitant ainsi de faire transiter sur le réseau des images des objets reconnus). Le bloc d'interprétation 46 est adapté pour inspecter les protocoles RUI, 'reboucher les masques' par leur image synthétique, générer à partir de leur description dans le catalogue d'objets, et ainsi créer une image de synthèse associée à chaque image en fonction des données relatives à chaque objet d'intérêt insérées dans l'ensemble de données transmis pour chaque image du flux F1". Dans le bloc d'interface 50, se trouve le client RUI capable d'interpréter le protocole de RUI utilisé entre l'émetteur et le récepteur

Cette dernière version nécessite un moteur de rendu graphique de type client (Fig 45") serveur (Fig 50) pour supporter de tels protocoles ce qui peut s'avérer trop gourmand en ressource matérielle, mais présente l'intérêt d'être interopérable avec tous les types de récepteur capable de faire du « RUI ».

Dans les modes de réalisation des figures 6 et 7, les images ne sont plus transmises sous forme de pixels, les données d'image en-dehors des objets d'intérêt ne sont plus transmises, mais les objets d'intérêt prédéfinis sont reconnus dans l'image par intelligence artificielle, principalement des réseaux de neurones profonds, dans l'émetteur, et localisés dans l'image, puis l'image est re-synthétisée (dans le dispositif émetteur ou le dispositif récepteur) sur la base d'au moins une représentation vectorielle associée à l'identifiant de chaque objet.

L'invention a été décrite ci-dessus dans un cas particulier où le flux à transmettre était un flux d'images. Bien sûr, l'invention est également applicable au cas où le flux comporte à la place ou en plus un flux de phonie ou un flux de texte etc. Les objets d'intérêt sont alors définis en conséquence, par exemple, dans le cas phonie, les objets peuvent comprendre la voix d'interlocuteurs prédéfinis, par exemple celle d'un pilote.

## Revendications

1. Procédé de transmission, via un canal de transmission associé à une bande passante disponible, d'un flux comprenant des ensembles successifs de données à transmettre, ledit procédé comprenant les étapes suivantes mises en œuvre par un dispositif électronique d'émission pour l'émission de l'ensemble de données courant à transmettre :
- collecte de la valeur courante de bande passante disponible et comparaison de la valeur courante collectée avec la bande passante requise pour l'émission de l'ensemble de données courant à transmettre selon des premières modalités de codage dudit ensemble de données ;
- si la valeur courante collectée de bande passante est supérieure ou égale à ladite bande passante requise, transmission dudit ensemble de données courant codé selon lesdites premières modalités de codage dudit ensemble de données ;
- seulement si la valeur courante collectée de bande passante est inférieure à ladite bande passante requise, transmission dudit ensemble de données courant codé selon des deuxièmes modalités de codage distinctes des premières modalités et requérant une bande passante inférieure à la valeur courante de bande passante disponible pour l'émission de l'ensemble de données courant à transmettre selon lesdites deuxièmes modalités de codage dudit ensemble de données ;
ledit procédé étant **caractérisé en ce qu'**il comprend les étapes suivantes :
seulement si la valeur courante collectée de bande passante est inférieure à ladite bande passante requise, une liste d'objets d'intérêt ayant été prédéfinie,
détermination automatique de si l'ensemble de données courant à transmettre comporte au moins un desdits objets de la liste prédéfinie ;
si l'ensemble de données courant à transmettre a été déterminé comme comportant au moins un desdits objets de la liste prédéfinie, répartition des données de l'ensemble de données courant à transmettre en au moins un premier et un deuxième segments de données, le deuxième segment (S2) correspondant aux données déterminées comme le(s)dit(s) objet(s), le premier segment (S1) correspondant aux autres données, lesdites deuxièmes modalités de codage comprenant un traitement sélectif de codage sur le deuxième segment de données courant à transmettre, correspondant à une meilleure qualité de codage que celles des deuxièmes modalités de codage relatives au premier segment dudit ensemble de données.

2. Procédé de transmission selon la revendication 1, selon lequel la qualité de codage du traitement sélectif de codage réalisé sur le deuxième segment de données (S2) est au moins égale, ou sensiblement égale, à la qualité de codage selon lesdites premières modalités de codage.

3. Procédé de transmission selon la revendication 1 ou 2, selon lequel la détermination automatique de si l'ensemble de données courant à transmettre comporte au moins un desdits objets de la liste prédéfinie est effectuée à l'aide d'un modèle dudit objet préalablement issu d'un apprentissage automatique d'un réseau de neurones.

4. Procédé de transmission selon l'une des revendications précédentes, selon lequel les ensembles de données sont des images et selon lequel, selon les deuxièmes modalités de codage, le premier segment (S1) n'est pas transmis, et une portion d'image vectorielle étant préalablement associée à chaque objet de la liste prédéfinie, les données relatives au deuxième segment (S2) transmises comportent un identifiant d'un objet de la liste déterminé dans l'image, la position dans l'image dudit objet et ladite portion d'image vectorielle.

5. Procédé de réception, depuis un canal de transmission associé à une bande passante disponible, d'un flux comprenant des ensembles successifs de données à transmettre, ledit procédé comprenant les étapes suivantes mises en œuvre par un dispositif électronique de réception (30) :
- réception d'un ensemble de données courant codé selon des premières modalités de codage ou selon des deuxièmes modalités de codage selon la valeur de bande passante disponible, les premières modalités de codage requérant une bande passante supérieure aux deuxièmes modalités de codage ; et
- décodage dudit ensemble de données selon des premières modalités de décodage ou selon des deuxièmes modalités de décodage ;
ledit procédé étant **caractérisé en ce qu'**il comprend les étapes suivantes mises en œuvre par le dispositif électronique de réception pour la mise en œuvre des deuxièmes modalités de décodage :
- décodage d'un premier segment (S1) de l'ensemble de données par un premier décodeur (33) et le décodage d'un deuxième segment (S2) comprenant le reste de l'ensemble de données par un deuxième décodeur (32), les modalités de décodage desdits premier et deuxième décodeurs étant distinctes, la qualité des images décodées par le premier décodeur étant inférieure à celle des images décodées avec le deuxième décodeur ;
- détection dans le premier segment décodé par le premier décodeur de la présence d'au moins un objet prédéfini, en fonction d'une base de données comportant des modèles d'objets prédéfinis, préalablement obtenus d'un apprentissage automatique d'un réseau de neurones ;
- augmentation de la qualité du premier segment par modification, en fonction dudit modèle d'objet, dudit objet détecté.

6. Procédé de réception selon la revendication 6, comprenant une étape mise en œuvre par un dispositif électronique de réception (30) de codage, selon des premières modalités de codage associées aux premières modalités de décodage, de l'ensemble de données comprenant le premier segment décodé ainsi modifié et le deuxième segment décodé en vue d'une émission dudit ensemble de données.

7. Programme d'ordinateur comportant des instructions logicielles qui, lorsqu'elles sont exécutées par un ordinateur, mettent en œuvre un procédé selon l'une quelconque des revendications précédentes.

8. Dispositif (10) émetteur adapté pour transmettre, sur un canal de transmission associé à une bande passante disponible, un flux comprenant des ensembles successifs de données à transmettre, pour collecter la valeur courante de bande passante disponible et pour comparer la valeur courante collectée avec la bande passante requise pour l'émission de l'ensemble de données courant à transmettre selon des premières modalités de codage dudit ensemble de données ;
- ledit dispositif émetteur étant adapté, si la valeur courante collectée de bande passante est supérieure ou égale à ladite bande passante requise, transmettre ledit ensemble de données courant codé selon lesdites premières modalités de codage dudit ensemble de données ;
- ledit dispositif émetteur étant adapté, seulement si la valeur courante collectée de bande passante est inférieure à ladite bande passante requise, pour transmettre ledit ensemble de données courant codé selon des deuxièmes modalités de codage distinctes des premières modalités et requérant une bande passante inférieure à la valeur courante de bande passante disponible pour l'émission de l'ensemble de données courant à transmettre selon lesdites deuxièmes modalités de codage dudit ensemble de données ;
ledit dispositif (10) émetteur étant **caractérisé en ce qu'**il est adapté pour, seulement si la valeur courante collectée de bande passante est inférieure à ladite bande passante requise, une liste d'objets d'intérêt ayant été prédéfinie, déterminer automatiquement si l'ensemble de données courant à transmettre comporte au moins un desdits objets de la liste prédéfinie ;
ledit dispositif émetteur étant adapté pour, si l'ensemble de données courant à transmettre a été déterminé comme comportant au moins un desdits objets de la liste prédéfinie, répartir des données de l'ensemble de données courant à transmettre en au moins un premier et un deuxième segments de données, le deuxième segment (S2) correspondant aux données déterminées comme le(s)dit(s) objet(s), le premier segment (S1) correspondant aux autres données, lesdites deuxièmes modalités de codage comprenant un traitement sélectif de codage sur le deuxième segment de données courant à transmettre, correspondant à une meilleure qualité de codage que celles des deuxièmes modalités de codage relatives au premier segment dudit ensemble de données.

9. Dispositif (10) émetteur selon la revendication 8, dans lequel la qualité de codage du traitement sélectif de codage réalisé sur le deuxième segment de données (S2) est au moins égale, ou sensiblement égale, à la qualité de codage selon lesdites premières modalités de codage

10. Dispositif (30) récepteur adapté pour recevoir, depuis un canal de transmission associé à une bande passante disponible, un flux comprenant des ensembles successifs de données à transmettre,
ledit dispositif récepteur (30) étant adapté pour recevoir un ensemble de données courant codé selon des premières modalités de codage ou selon des deuxièmes modalités de codage selon la valeur de bande passante disponible, les premières modalités de codage requérant une bande passante supérieure aux deuxièmes modalités de codage, pour décoder ledit ensemble de données selon des premières modalités de décodage ou selon des deuxièmes modalités de décodage
ledit dispositif récepteur (30) étant **caractérisé en ce qu'**il comprend un premier décodeur (33) et un deuxième décodeur (32) et **en ce qu'**il est adapté pour, lors du décodage selon les deuxièmes modalités de décodage :
décoder un premier segment (S1) de l'ensemble de données avec le premier décodeur (33) et décoder un deuxième segment (S2) comprenant le reste de l'ensemble de données avec deuxième décodeur (32), les modalités de décodage desdits premier et deuxième décodeurs étant distinctes, la qualité des images décodées par le premier décodeur étant inférieure à celle des images décodées avec le deuxième décodeur ;
- ledit dispositif récepteur (30) étant adapté pour détecter dans le premier segment décodé par le premier décodeur, la présence d'au moins un objet prédéfini, en fonction d'une base de données comportant des modèles d'objets prédéfinis, préalablement obtenus d'un apprentissage automatique d'un réseau de neurones ;
- ledit dispositif récepteur (30) étant adapté pour augmenter la qualité du premier segment par modification, en fonction dudit modèle d'objet, dudit objet détecté.
